# FASCICULE DE BREVET EUROPEEN

(11) **EP 0 478 742 B1**
(45) Date de publication et mention de la délivrance du brevet: **19.07.1995**
(21) Numéro de dépôt: 91907513.5
(22) Date de dépôt: 02.04.1991
(51) Int. Cl.: F16L 1/20, F16L 1/18

(54) **DISPOSITIF ET PROCEDE POUR DEROULEMENT SENSIBLEMENT VERTICAL DES CONDUITES TUBULAIRES FLEXIBLES**
VERFAHREN UND VORRICHTUNG ZUR UNGEFÄHR VERTIKAL AUSGERICHTETEN ABWICKLUNG VON SCHLÄUCHEN
DEVICE AND PROCESS FOR UNROLLING FLEXIBLE TUBULAR CONDUITS ESSENTIALLY VERTICALLY

(30) Priorité: 30.03.1990 FR 9004105
(43) Date de publication de la demande: 08.04.1992
(73) Titulaire: COFLEXIP, 92100 Boulogne-Billancourt (FR)
(72) Inventeur: MALOBERTI, René, F-94500 Champigny (FR); COUTAREL, Alain, F-75007 Paris (FR); ESPINASSE, Philippe, 22420 Rio de Janeiro (BR)
(74) Mandataire: Nony, Michel
(86) Numéro de dépôt international: FR9100264
(87) Numéro de publication internationale: WO9115699

(56) Documents cités:
- EP-A- 0 054 332
- BE-A- 778 202
- GB-A- 1 059 932
- US-A- 4 073 156

## Description

L'invention se rapporte à un procédé et à un dispositif pour effectuer la pose de conduites flexibles, notamment des conduites tubulaires flexibles comportant des moyens tensionneurs disposés sur la trajectoire verticale de ladite conduite tubulaire flexible.

Il est connu d'effectuer, à partir d'un navire, la pose de conduites tubulaires flexibles. Une telle conduite peut être stockée dans un panier d'axe vertical, ou sur un tambour d'axe horizontal. La conduite est déroulée sensiblement horizontalement à partir des moyens de stockage.
La conduite est retenue par des moyens tensionneurs assurant sa suspension. Les moyens tensionneurs supportent la tension mécanique provenant du poids de la conduite déroulée et évitent ainsi aux moyens de stockage de subir ce poids. Après les moyens tensionneurs, la conduite tubulaire flexible passe sur un organe déviateur tel qu'une roue ou une goulotte incurvée, placée par exemple à l'arrière du navire et assurant le guidage de la conduite flexible et le franchissement du bord du navire, l'axe de la conduite passant d'une direction sensiblement horizontale à une direction fortement inclinée, l'angle d'inclinaison pouvant être de quelques degrés à environ 15 à 20 degrés par rapport à la verticale. La conduite plonge dans l'eau pour être déposée sur le fond marin. Les moyens tensionneurs ainsi que la roue assurant le passage de la trajectoire horizontale à la trajectoire verticale doivent donc supporter le poids de la conduite tubulaire flexible compris entre le navire et le fond au fur et à mesure que le navire de pose progresse. Des moyens tensionneurs ainsi que l'organe déviateur doivent donc pouvoir supporter la traction exercée par la partie de la conduite flexible suspendue entre le navire et le fond. Dans le but de pouvoir poser des conduites flexibles de diamètre relativement gros dans des profondeurs d'eau importantes, on est conduit à employer des moyens tensionneurs et des organes déviateurs dont les dimensions et le coût posent problème, et qui craint un encombrement excessif sur le pont du navire de pose.

Il est également connu d'utiliser pour effectuer la pose un équipement tel qu'un treuil combinant des fonctions de stockage et des tensionneurs de la conduite flexible, ce qui nécessite également de faire passer la conduite flexible sur un organe déviateur pour la mettre à l'eau. Un tel treuil, de même que l'organe déviateur deviennent d'une dimension et d'un encombrement excessifs lorsque le diamètre de la conduite et la profondeur d'eau augmentent. Au fur et à mesure que le diamètre de la conduite tubulaire flexible et la profondeur augmentent, la taille de la roue devient de plus en plus importants. Une telle roue peut avoir un diamètre de l'ordre de 10 mètres pour une profondeur sensiblement égale à 500 mètres.

Avec les dispositifs de type connu, il n'est pas possible de dépasser cet ordre de profondeur. Les roues de diamètre supérieur sont difficilement réalisables.

De plus, on a des problèmes de passage des embouts de connexion des sections de conduites tubulaires flexibles ou des accessoires auxiliaires montés sur la conduite flexible, tels que colliers, raidisseurs, bouées, anodes, etc ..., du fait que ces accessoires relativement rigides et dont la dimension transversale externe est supérieure au diamètre externe de la conduite flexible doivent passer sur l'organe déviateur.

Ces problèmes peuvent être résolus, de manière connue en utilisant des portiques basculant tels que décrits dans FR-A-2 580267. Mais, de même que dans le cas des équipements de pose connus tels que des moyens tensionneurs, treuils et organes déviateurs, il a été trouvé malgré les avantages d'un tel dispositif, qu'il devenait d'un encombrement excessif lorsque le diamètre des conduites flexibles et la profondeur d'eau augmentent.

Avec les dispositifs de type connu, il n'est pas possible de dépasser une profondeur d'eau de l'ordre de 500 mètres lorsque le diamètre interne de la conduite tubulaire flexible à poser atteint environ 30 cm.

On connaît par ailleurs par EP-A-0 054 332 un procédé et un dispositif pour poser des conduites rigides raccordées par soudure et comportant des accessoires rigides. Le dispositif comprend une pince mobile et une pince de retenue fixe se déplaçant l'une par rapport à l'autre de manière à saisir alternativement la conduite. Les accessoires rigides sont régulièrement espacés le long de la conduite et suffisamment proches les uns des autres pour que, lorsque la pince mobile saisit un accessoire la longueur de sa course soit suffisante pour permettre à l'accessoire adjacent de venir en regard de la pince fixe qui le saisit à son tour pendant la remontée de la pince mobile. Avec un tel dispositif il n'est pas possible d'assurer la pose d'une conduite ne comportant pas d'accessoires rigides ou pour laquelle il existe une grande longueur de conduite entre deux accessoires consécutifs.

La présente invention a pour but la pose des conduites flexibles à des profondeurs sensiblement supérieures à celles qui sont possible en utilisant les moyens connus comme par exemple une profondeur de l'ordre de 1000 à 2000 mètres. Le dispositif selon la présente invention devant pouvoir supporter des forces de traction importantes qui peuvent atteindre et même dépasser 250 tonnes dans le cas d'une conduite de diamètre sensiblement égal à 30 cm pour une profondeur de 1000 mètres. A l'exception des tronçons comportant un accessoire rigide, ou de rigidité augmentée par rapport à la flexion de la conduite flexible, et dont l'encombrement extérieur dépasse le diamètre extérieur de la conduite flexible, la descente de longueur continue de conduite tubulaire flexible est assurée par les moyens tensionneurs principaux qui reprennent la tension mécanique exercée par la partie de la conduite flexible suspendue aux moyens tensionneurs entre le navire de pose et le fond. Dans ces conditions, la tension en amont des moyens tensionneurs s'exerçant sur la partie amont de la conduite flexible en provenance des moyens de stockage est très faible, et, de préférence, pratiquement négligeable. Il a été trouvé que dans ces conditions il devient possible de faire subir à un tronçon de conduite situé dans la partie amont, entre les moyens de stockage et les moyens tensionneurs, une flexion relativement importante, ceci étant expliqué par le fait qu'il n'y a pas, dans ce cas, combinaison de la flexion avec une charge de traction axiale. Le dispositif selon l'invention permet aussi sans recourir à des équipements encombrants et sophistiqués, de réaliser des changements imposés à la conduite flexible entre le point où elle est extraite des moyens de stockage et l'endroit où elle pénètre dans l'eau, l'axe du flexible devant, par exemple, passer d'une direction horizontale à une direction voisine de la verticale. On peut ainsi faire passer la conduite flexible sur un organe de guidage tel qu'une gouttière incurvée ou une roue de faible diamètre, y compris le passage des accessoires rigides et encombrants montés sur la conduite. Les moyens tensionneurs utilisés sont du type treuil linéaire. Il a été trouvé que les treuils de ce type permettent d'augmenter la charge de tension axiale exercée par la conduite flexible et qui doit être reprise par les moyens tensionneurs, ce qui permet, pour une conduite flexible de structure donnée, d'augmenter la profondeur d'eau dans laquelle elle peut être posée.

D'une façon générale, un treuil est un équipement de manutention qui permet de mettre une charge en mouvement, l'effort étant transmis à la charge au travers d'un corps allongé, comme par exemple un câble, un fil, une conduite tubulaire flexible ou un pipeline. La charge peut être le poids propre de la conduite et/ou résulter des forces additionnelles exercées, comme par exemple forces de friction, forces hydrodynamiques, poids ou résistance au mouvement d'un objet attaché. On entend par treuil linéaire un treuil pour lequel la portion de conduite sur laquelle le treuil exerce son action est rectiligne. En d'autres termes, le treuil linéaire se caractérise par le fait que la conduite n'est soumise à aucune flexion entre l'amont du treuil, constitué par le point où la conduite entre dans le treuil avec une tension mécanique T₀ et l'aval du treuil constitué par le point où la conduite quitte le treuil et où la tension axiale dans la conduite est supérieure à T₀. Divers exemples de treuils-linéaires sont connus comme par exemple le tensionneur à chenilles dont un exemple est décrit dans FR-A-2.089.215, un tensionneur à pneu dont un exemple est décrit dans US-A-3.589.580, une pince pas-à-pas dont un exemple est décrit dans US-A-3.215.203, ou un dispositif hybride comme par exemple un tensionneur comportant deux chenilles et deux pneus, tel qu'illustré dans FR-A-2.601.828. Ne sont pas considérés comme des treuils linéaires des treuils à tambour motorisé, des cabestans mono ou double tambours ou des cabestans multi-roues.

Outre le treuil linéaire, le dispositif selon la présente invention comporte des moyens de retenue auxiliaires destinés à la reprise de l'effort de sustentation de la conduite flexible lors du franchissement du treuil linéaire par un accessoire rigide et encombrant. Pendant cette étape de franchissement par l'accessoire, le treuil linéaire n'est pas utilisé pour participer à la reprised des efforts de tension de la conduite flexible, et il est mis en position ouverte de façon à libérer le passage central de dimension transversale suffisante pour laisser passer librement l'accessoire encombrant.

Par exemple les organes de préhension par le treuil, tels que des chenilles sans fin équipées de patins, ou des roues équipées de pneux, sont montés sur au moins deux châssis se faisant face, les châssis étant disposés de façon à pouvoir être écartés latéralement les uns des autres, ce qui permet d'agrandir la dimension transversale du passage vertical.

Les moyens de retenue auxiliaires comportent au moins des organes de retenue mobiles dont une première extrémité est connectée à l'accessoire monté sur la conduite flexible pendant la durée de la phase de franchissement du treuil linéaire par l'accessoire, l'effort de traction axiale exercé par la conduite flexible étant transmis par l'accessoire auxdits organes de retenue mobiles.

Avantageusement, les organes de retenue mobiles se déplacent dans des plans verticaux contenant l'axe de la conduite flexible qui sont situés entre deux châssis supportant les organes de préhension du treuil linéaire, de manière à éviter une interaction entre les organes de retenue mobiles et le treuil linéaire.

De façon avantageuse, les moyens de retenue auxiliaires comportent au moins un, et de préférence au moins deux organes allongés de traction tels que des câbles métalliques, des cordes ou des chaînes qui jouent le rôle d'organes de retenue mobiles. Dans un mode réalisation préféré, les organes de retenue mobiles sont constitués par des câbles dont la première extrémité inférieure est fixée à l'accessoire monté sur la conduite flexible, et qui sont enroulés à leur seconde extrémité sur des treuils de manoeuvre. D'autres moyens connus tels que des vérins hydrauliques ou mécaniques peuvent mis en oeuvre sans sortir du cadre de la présente invention.

Dans un mode de réalisation particulier, les moyens de retenue auxiliaires comportent en outre des organes de retenue fixes qui permettent d'assurer la suspension sans déplacement vertical de la conduite flexible par l'intermédiaire de l'accessoire monté sur la conduite, l'accessoire étant porté par lesdits organes retenus fixes.

Avantageusement, les organes de retenue fixes comportent une table support qui est centrée sur l'axe vertical des moyens tensionneurs principaux, et de préférence disposés sous les moyens tensionneurs principaux.

La table support possède une position ouverte qui permet le passage libre des accessoires montés sur la conduite et une position fermée qui permet d'assurer le support desdits accessoires de façon à pouvoir suspendre la conduite flexible par l'intermédiaire de l'accessoire. Ladite position fermée permet néanmoins le passage libre de la conduite flexible en dehors des accessoires.

La table support permet d'effectuer diverses opérations nécessaires sur la conduite tubulaire du flexible. Par exemple, on effectue le raccordement des tronçons successifs de la conduite tubulaire flexible. Les raccords sont effectués par exemple par bridages, par vissages ou par soudures d'embouts disposés aux extrémités de chaque section de conduite tubulaire flexible.

Avantageusement, on utilise une ouverture centrale dans le navire, appelée moon-pool, pour effectuer la pose de la conduite tubulaire flexible. L'utilisation du moon pool permet de réduire au minimum les effets de sustentation dynamique imposés à la conduite tubulaire flexible, par exemple les mouvements du navire et qui augmentent de façon nuisible la traction supportée par la conduite flexible.

Avantageusement, le navire de pose compose une structure support tel qu'un derrick de façon à pouvoir supporter les moyens tensionneurs principaux, ainsi que les organes de guidage tels que gouttières inversées ou roues. En outre, la seconde extrémité des organes de retenue mobiles peut être également fixée, directement ou indirectement à ladite structure support. Ainsi, par exemple, le ou les treuils de manutation des câbles utilisés comme organes de support mobile sont montés sur le derrick.

Les caractéristiques du procédé de la présente invention font l'objet des revendications 1 et 2.

Les caractéristiques du dispositif selon la présente invention font l'object des revendications 3 à 9.

L'invention sera mieux comprise au moyen de la description ci-après et des figures annexées données comme des exemples non limitatifs parmi lesquels :
- la figure 1 est une vue de profil d'un navire de pose mettant en oeuvre le procédé selon la présente invention ;
- la figure 2 est un schéma explicatif de la mise en oeuvre d'une table de travail dans le procédé selon la présente invention ;
- la figure 3 est un schéma explicatif de la mise en oeuvre de treuil dans le procédé selon la présente invention.

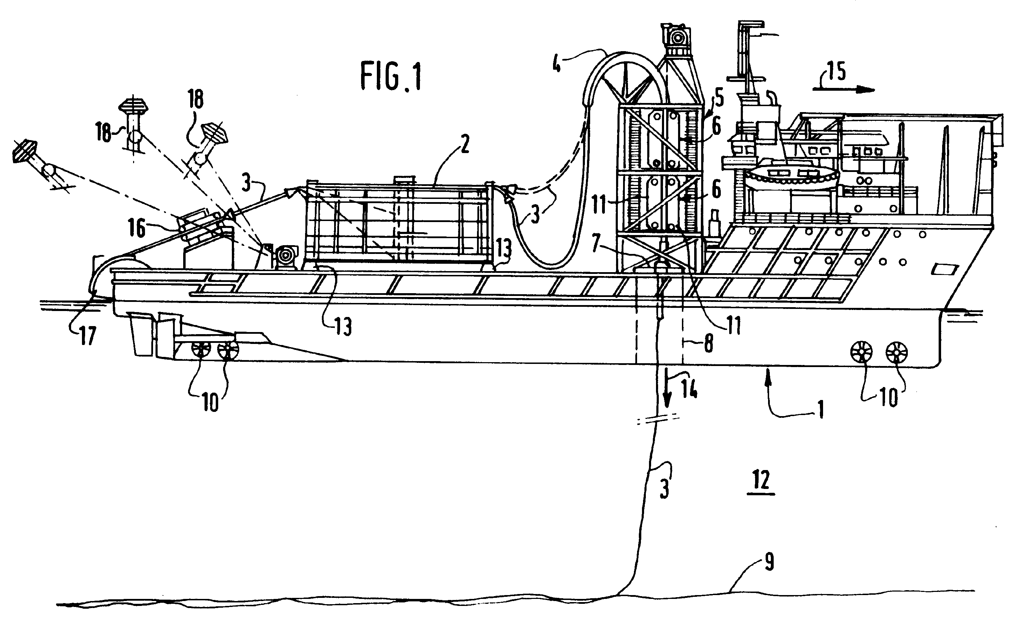

Sur les figures 1 à 3 on a utilisé les mêmes références pour désigner les mêmes éléments.

Sur la figure 1, on peut voir un navire de pose 1 équipé du dispositif selon la présente invention, ce navire, de type perfectionné, comportant notamment des moyens 10 de positionnement dynamique.

Le dispositif selon la présente invention comporte des moyens de stockage 2 de la conduite tubulaire flexible 3, des moyens de guidage 4 de la conduite tubulaire flexible 3 et des moyens tensionneurs 6 du type treuil linéaire.

Les moyens de stockage 2 comportent avantageusement un panier de forme sensiblement cylindrique d'axe vertical.

Les moyens de guidage comportent par exemple une roue, ou comme illustré sur la figure, une goulotte 4 permettent le passage de la conduite tubulaire flexible 3 à une direction verticale. Entre le panier 2 et les moyens de guidage 4, la conduite tubulaire flexible 3 prend la forme d'une chaînette. La chaînette sera plus ou moins concave selon la longueur de la conduite flexible suspendue entre les moyens de stockage 2 et les moyens de guidage 4. Sur la figure, on a illustré une trajectoire supérieure correspondant par exemple à une conduite tubulaire flexible ayant un diamètre intérieur sensiblement égal à 7,5 cm , et une trajectoire inférieure, correspondant par exemple à une conduite tubulaire flexible ayant un diamètre interne sensiblement égal à 30 cm.

En sortie des moyens de guidage 4, on a disposé les moyens tensionneurs 6. Dans l'exemple illustré sur la figure, on a disposé en série deux moyens tensionneurs 6 de type multichenilles montés sur un derrick 5 de forme sensiblement parallélépipède rectangle. Chacun desdits moyens tensionneurs 6 reprend une partie de la charge. Il est bien entendu que l'utilisation d'un treuil linéaire unique, notamment du type multichenilles ne sort pas du cadre de la présente invention. D'autres formes, par exemple pyramidale, du derrick 5 ne sortent pas du cadre de la présente invention. Les moyens tensionneurs 6 sont disposés verticalement en aval des moyens de guidage 4, des moyens de stockage 2 et en amont d'une table de travail 7 permettant la manutention de la conduite tubulaire flexible 3. Les moyens tensionneurs 6 sont destinés à supporter le poids de la conduite tubulaire flexible 3 disposée verticalement jusqu'au fond marin 9. Les moyens tensionneurs 6 comportent par exemple une pluralité de chenilles 11. Par exemple, chaque moyen tensionneur 6 comporte deux, trois ou quatre chenilles 11 qui exercent une force de serrage sur la conduite tubulaire 3. L'avance simultanée des chenilles 11 exerçant la force de serrage sur la conduite tubulaire 3 permet la descente de la conduite tubulaire 3 selon la flèche 14. Simultanément, le navire 1 avance selon la flèche 15.

Le fait d'utiliser des moyens tensionneurs 6 disposés verticalement permet de faire passer la conduite tubulaire 3 par le moon-pool 8 du navire 1. Cette disposition évite d'avoir les moyens tensionneurs 6 et la goulotte 4 placés à l'arrière ou à l'avant du navire. Une position excentrée, par exemple à l'avant ou à l'arrière du navire et non pas en position centrale comme le permet le moon pool entraine une aggravation sensible des effets dynamiques induits par les mouvements du navire, d'où une augmentation néfaste des efforts de traction axiale supportés par la conduite flexible.

Avantageusement, le navire 1 comprend des moyens permettant le transbordement en mer de conduites tubulaires flexibles 3 à partir d'un navire de ravitaillement. Dans l'exemple illustré sur la figure, le moyen de transbordement disposé à l'arrière comporte une goulotte 17, un moyen tensionneur 16, un portique 18 dont trois positions ont été représentées sur la figure 1. Le moyen tensionneur 16 comporte par exemple deux chenilles diamètralement opposées.

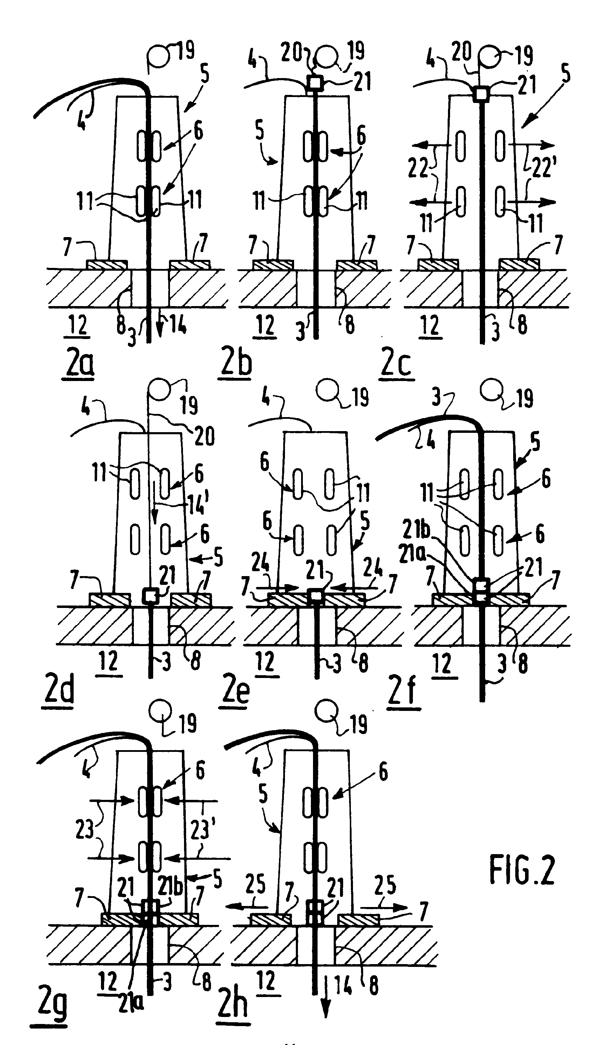

Sur la figure 2, on a illustré la pose des sections des conduites tubulaires flexibles 3, par mise en oeuvre dans le procédé selon la présente invention.

Sur la figure 2a, on peut voir une étape normale de pose de conduites tubulaires flexibles 3. La table de travail 7 est ouverte pour permettre le passage de la conduite tubulaire flexible 3 vers la mer 12. On se trouve au niveau d'une section de conduite tubulaire flexible dont on a pas encore atteint l'extrémité équipée d'un embout. Chaque section de conduites tubulaires flexibles 3 est terminée par un embout 21 normalement posé et testé en usine. Dans le cas où l'on détecterait un défaut dans la conduite tubulaire flexible 3, il est possible de poser un embout intermédiaire sur un navire de pose pour renforcer ou éliminer une section défectueuse de conduite tubulaire flexible 3. Dans un tel cas, il sera nécessaire d'effectuer le test sur le site de la conduite tubulaire flexible 3.

Comme on peut le voir sur la figure 2b, l'embout 21a est attaché à des moyens de retenue auxiliaires. Par exemple, on utilise un câble 20 relié à un treuil 19. Dans l'étape illustrée sur la figure 2b, les moyens tensionneurs 6 assurent la suspension de la partie suspendue de la conduite tubulaire flexible 3. Cela est symbolisé par le fait que le câble 20 n'est pas tendu.

Les moyens tensionneurs 6 sont relâchés. Par exemple, dans le cas d'utilisation de moyens tensionneurs 6 à chenilles 11, on écarte les tiroirs des chenilles 11, comme illustré par les flèches 22 et 22′. Le câble 20 est tendu, le treuil 19 assurant la suspension de la conduite tubulaire flexible 3 comme illustré sur la figure 2c.

Le déroulement du câble 20 à partir du treuil 19, symbolisé par la flèche 14′ permet d'amener l'embout 21 au niveau de la table de travail 7 comme illustré sur la figure 2d.

Sur la figure 2e, on a illustré la fermeture de la table de travail 7 illustrée par les flèches 24. A ce moment là, la table de travail 7 assure la sustentation de la conduite tubulaire flexible suspendue 3. Le maintien de l'embout 21 est assuré par exemple par épaulement, serrage ou coincement. Le câble 20 est libéré.

Comme illustré sur la figure 2f, on amène une nouvelle section de conduite tubulaire flexible 3 terminée par un second embout 21b. Contrairement à la précédente section de conduite tubulaire flexible 3 déroulée sur une grande hauteur, par exemple sur une hauteur correspondant à la profondeur de 1000 m, la nouvelle conduite tubulaire flexible 3 supporte des efforts de traction faibles correspondant à son poids déroulé sur la hauteur du derrick 5.

On effectue au niveau de la table de travail 7 les manutentions nécessaires à la connexion des deux embouts 21 de façon à former une liaison hydraulique étanche à la pression nominale et à assurer une liaison mécanique permettant, notamment la suspension de section inférieure de la conduite tubulaire 3 par la nouvelle section.

Comme illustré par les flèches 23 et 23′ de la figure 2g, on referme les moyens tensionneurs 6 pour permettre la suspension de la conduite tubulaire 3.

A ce moment là, il est possible, comme illustré par la flèche 25 de la figure 2h d'ouvrir la table de travail 7. La pose de la conduite tubulaire 3, symbolisée par la flèche 14, peut reprendre à l'aide des moyens tensionneurs 6.

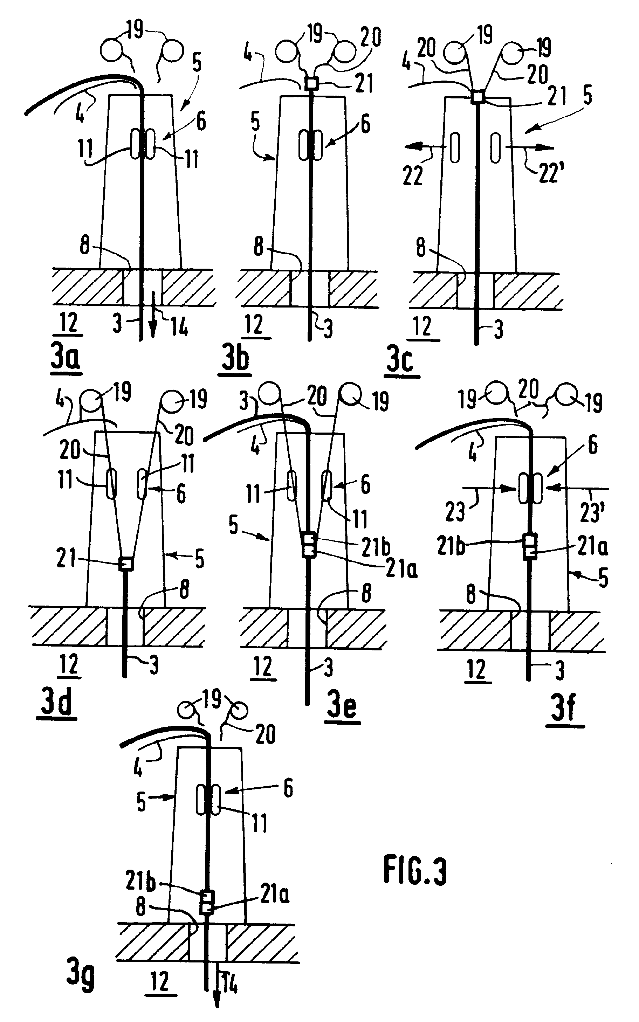

Sur la figure 3 on peut voir une variante du procédé de pose de sections de conduite tubulaire flexible 3, selon la présente invention.

Dans l'exemple non limitatif illustré sur la figure 3, les moyens tensionneurs 6 comportent un treuil linéaire unique, comportant des chenilles 11. Il est bien entendu que la mise en oeuvre d'un treuil linéaire comportant un seul train de chenilles 11 pour la mise en oeuvre du procédé de la figure 2 ne sort pas du cadre de la présente invention.

Sur la figure 3a, on peut voir une étape normale de pose de conduites tubulaires flexibles 3. On se trouve au niveau d'une section de conduite flexible dont on n'a pas encore atteint l'extrémité équipée d'un embout. La conduite 3 est déroulée dans la mer 12 comme symbolisé par la flèche 14. Pendant ce déroulement, on utilise le moyen tensionneur 6 comportant un treuil linéaire qui joue le rôle d'un moyen tensionneur principal. Sur la figure 3b, on est arrivé à l'extrémité d'une section de la conduite tubulaire 3 terminée par un embout 21a. L'embout 21 est solidarisé avec des moyens de retenue auxiliaires. Dans l'exemple de la figure 3, les moyens de retenue auxiliaires comportent deux câbles 20 manoeuvrés par deux treuils 19 placés symétriquement par rapport à l'axe de la conduite 3. Dans l'exemple illustré sur la figure 3b, les moyens tensionneurs 6 principaux assurent la suspension de la partie suspendue de la conduite tubulaire flexible 3. Cela est symbolisé par le fait que les câbles 20 ne sont pas tendus.

Les moyens tensionneurs principaux 6 sont relachés. Par exemple, dans le cas d'utilisation d'un moyen tensionneur 6 à chenilles 11, on écarte le tiroir des chenilles 11 comme illustré par les flèches 22, 22′. Les câbles 20 sont tendus, le treuil 19 assure la suspension de la conduite tubulaire flexible 3 comme illustré sur la figure 3c. Le déroulement des câbles 20 à partir des treuils 19 permet le franchissement par l'embout 21 du moyen tensionneur principal 6 comportant le treuil linéaire, comme illustré sur la figure 3d.

Comme illustré sur la figure 3e, on amène une nouvelle section de conduite tubulaire flexible 3 terminée par un second embout 21b. Contrairement à la conduite tubulaire flexible 3 déroulée sur une grande hauteur, par exemple sur une hauteur correspondant à la profondeur de 1000 mètres, la nouvelle conduite tubulaire flexible 3 supporte des efforts de traction faibles correspondant à son poids déroulé sur la hauteur du derrick 5 jusqu'à l'embout 21a de la section de conduite tubulaire flexible 3 inférieure.

On effectue, au niveau de l'embout 21 de la section inférieure de la conduite tubulaire flexible 3, les manutentions nécessaires à la connexion des deux embouts 21, de façon à former une liaison hydraulique étanche à la mer à la pression nominale et assurer une liaison mécanique permettant, notamment la suspension de la section inférieure de la conduite tubulaire 3 par la nouvelle section.

Comme illustré par les flèches 23, 23′ sur la figure 3f, on referme les moyens tensionneurs principaux 6 pour permettre la suspension de la conduite tubulaire flexible 3. A ce moment là, on désolidarise les câbles 20 de l'embout 21a de la section inférieure de la conduite tubulaire flexible 3. Les moyens tensionneurs principaux 6 assurent la suspension de la conduite. La pose de la conduite tubulaire flexible 3, symbolisée par la flèche 14, peut reprendre à l'aide des moyens tensionneurs principaux 6.

Selon une autre variante du procédé de pose selon l'invention, non illustré, il est possible de réaliser la pose d'une conduite flexible continue comportant un accessoire auxiliaire relativement rigide et encombrant, c'est-à-dire dont les dimensions transversales dépassent le diamètre extérieur de la conduite flexible sur laquelle il est monté.

L'opération consistant à faire passer lesdits accessoires à travers le treuil linéaire peut être réalisée de façon semblable à l'opération décrite par la figure 3, la différence étant que la conduite flexible 3 est continue sans interruption de part et d'autre de l'accessoire 21. Il n'est donc pas nécessaire comme illustré sur la figure 3e d'amener une nouvelle section de conduite flexible pour connecter son embout 21b à l'embout 21a de la première section. Il suffit de saisir l'accessoire 21 avec l'extrémité des câbles 20 au moment où il sort de la goulotte 4 pour se trouver à la verticale du treuil linéaire 6, la traction de la conduite étant reprise par les câbles 20, et on écarte les tiroirs du tensionneur 6. La descente de la conduite flexible 3 se poursuit, la conduite étant retenue par les câbles 20 descendus à partir du treuil 19. Une fois le treuil linéaire 6 franchi par l'accessoire 21, on peut resserer à nouveau le treuil 6 sur la conduite et reprendre la poursuite de la pose à partir du treuil 6, les câbles 20 ayant été déconnectés de l'accessoire 21. La conduite tubulaire flexible 3 quitte le treuil linéaire avec une inclinaison importante, l'angle qu'elle présente par rapport à la verticale pouvant varier en fonction de la profondeur d'eau et des circonstances de l'opération de pose. Cet angle peut faire courammment 5 à 10 degrés, mais il peut aussi être extrêmement faible, la conduite étant pratiquement verticale, en particulier par grande profondeur d'eau, ou encore atteindre environ 15 degrés. Une des originalités de l'invention réside dans l'absence de tout moyen de guidage de la conduite tubulaire flexible après qu'elle ait quitté les moyens tensionneurs principaux. Toutefois, il est à noter que les moyens tensionneurs principaux 6 peuvent eux-mêmes assurer un guidage et une déviation par rapport à la verticale de la conduite tubulaire flexible 3. Par exemple, les moyens tensionneurs multi-chenilles permettent couramment une déviation par rapport à la verticale de plus ou moins 10 à 15°.

Bien que l'invention ait été décrite en relation avec des conduites tubulaires flexibles, il est bien entendu que la pose d'autres conduites flexibles ne sort pas du cadre de la présente invention. On peut utiliser le dispositif et le procédé selon la présente invention, notamment pour la pose de câbles, par exemple des câbles de traction, et surtout des câbles électriques. On entend par câbles électriques, tout câble comportant des conducteurs électriques, aussi bien les câbles de puissance que les câbles véhiculant de l'information.

L'invention s'applique principalement à la pose en mer profonde (profondeur supérieure à 900 m) de conduites tubulaires flexibles.

## Revendications

1. Procédé de pose, à partir d'un support flottant (1), d'une conduite flexible (3) comportant un accessoire rigide (21,21a,21b) monté sur ladite conduite flexible (3) et de dimension extérieure supérieure au diamètre extérieur de cette dernière, dans lequel on déroule une conduite flexible (3) saisie par sa surface externe par des moyens tensionneurs (6), du type treuil linéaire, d'axe sensiblement vertical et dans lequel :
a) pour effectuer le franchissement desdits moyens tensionneurs (6) par le tronçon de conduite flexible (3) sur lequel est monté l'accessoire rigide, on relie ledit accessoire rigide (21) à des moyens tensionneurs auxiliaires (19,20) de façon à reprendre la traction exercée par la conduite flexible (3) par lesdits moyens tensionneurs auxiliaires (19,20), pendant que la conduite flexible (3) est descendue à travers l'espace libre entre lesdits moyens tensionneurs (6) écartés latéralement,
b) on saisit par lesdits moyens tensionneurs (6), après les avoir rapprochés la surface externe de la conduite flexible (3) en amont de l'accessoire rigide de manière à ce que la traction exercée par la conduite flexible (3) soit à nouveau prise en charge par lesdits moyens tensionneurs (6) ;
c) après avoir libéré les moyens tensionneurs auxiliaires (19), on reprend le déroulement de la conduite flexible (3) par lesdits moyens tensionneurs (6), ces derniers comprenant le dernier moyen de guidage de la conduite au niveau du support flottant.

2. Procédé selon la revendication 1, pour la pose d'une conduite flexible (3) constituée de deux tronçons munis chacun d'un accessoire rigide sous la forme d'un embout d'extrémité (21a,21b), caractérisé par le fait que l'on met en oeuvre l'étape a) pour un premier tronçon de conduite flexible muni d'un embout d'extrémité (21a), que l'on met en oeuvre deux étapes intermédiaires consistant à :
- arrêter le défilement du premier tronçon de la conduite flexible (3) supporté par lesdits moyens tensionneurs auxiliaires (19,20),
- amener, en le faisant descendre à travers l'espace libre entre les moyens tensionneurs (6) écartés, un deuxième tronçon de conduite flexible (3) muni d'un embout d'extrémité (21b), et connecter l'embout (21b) à l'embout (21a) du premier tronçon de la conduite flexible (3), puis que l'on met en oeuvre l'étape b) pour le second tronçon de conduite flexible, suivie de l'étape c).

3. Dispositif pour la mise en oeuvre du procédé selon l'une quelconque des revendications 1 et 2, comportant :
- des moyens tensionneurs (6) de type treuil linéaire d'axe sensiblement vertical, aptes à assurer la descente normale de la conduite flexible (3) en saisissant la surface externe de la conduite flexible (3), et aptes à être écartés latéralement, lesdits moyens tensionneurs (6) comprenant le dernier moyen de guidage de la conduite flexible (3) à bord du support flottant (1),
- des moyens tensionneurs auxiliaires (19,20) comportant au moins un organe allongé de traction mobile (20), apte à être connecté à l'accessoire rigide (21,21a,21b) monté sur la conduite flexible (3).

4. Dispositif selon la revendication 3, caractérisé par le fait que les moyens tensionneurs (6) comportent une pluralité de chenilles (11).

5. Dispositif selon l'une quelconque des revendications 3 et 4, caractérisé par le fait que ledit organe allongé de traction mobile (20) est un câble, apte à être connecté audit accessoire monté sur la conduite flexible (3), et manoeuvré par un treuil (19).

6. Dispositif selon l'une quelconque des revendications 3 à 5, pour la mise en oeuvre du procédé selon la revendication 2, caractérisé par le fait que les moyens tensionneurs auxiliaires comportent en outre un organe de retenue fixe, tel qu'une table-support (7), apte, dans une première position ouverte, à laisser passer la conduite flexible (3) ainsi que le ou les accessoires (21,21a,21b)) montés sur cette dernière et dans une seconde position fermée à retenir la conduite flexible par l'accessoire monté sur elle.

7. Dispositif selon l'une quelconque des revendications 3 à 6, caractérisé par le fait qu'il comporte des moyens de stockage (2) de conduites flexibles (3) et des moyens de guidage (4) assurant le passage progressif de la direction de la conduite flexible (3) disposée dans les moyens de stockage (2) à la direction des moyens tensionneurs (6).

8. Dispositif selon la revendication 7, caractérisé par le fait que les moyens de guidage (4) comportent une goulotte en amont des moyens tensionneurs (6).

9. Dispositif selon la revendication 7 ou 8, caractérisé par le fait qu'il comporte une structure de support (5), telle qu'un derrick, montée sur le support flottant de pose (1) et permettant de supporter les moyens tensionneurs (6), les moyens tensionneurs auxiliaires (19,20) et les moyens de guidage (4).

## Patentansprüche

1. Verfahren zum Verlegen einer flexiblen Leitung (3) von einer schwimmenden Basis (1) aus, wobei an der Leitung ein starres Zubehör (21, 21a, 21b) befestigt ist, das in seinen Ausmaßen den Außendurchmesser der Leitung übertrifft, wobei man eine flexible Leitung (3) abwickelt, die an ihrer Oberfläche durch Einspannvorrichtungen (6) in Form einer geradlinigen Winde mit im wesentlichen vertikaler Achse erfaßt wird, und wobei:
a) man, um die Einspannvorrichtungen (6) mit dem Abschnitt der flexiblen Leitung (3), an welchem das starre Zubehör montiert ist, zu überwinden, das starre Zubehör (21) mit einer zusätzlichen Einspannvorrichtung (19, 20) verbindet, um den Zug auf die flexible Leitung (3) mit der zusätzlichen Einspannvorrichtung (19, 20) aufzunehmen, während die flexible Leitung (3) durch den Freiraum zwischen den seitlich weg bewegten Einspannvorrichtungen (6) hinabbewegt wird,
b) man mit den wieder herangeführten Einspannvorrichtungen (6) die Oberfläche der flexiblen Leitung (3) oberhalb des starren Zubehörs so ergreift, daß der Zug auf die flexible Leitung (3) von neuem von den Einspannvorrichtungen (6) ausgeübt wird, und
c) man nach Freigabe der zusätzlichen Einspannvorrichtung (19) das Abwickeln der flexiblen Leitung (3) mit den Einspannvorrichtungen (6), die die letzte Vorrichtung zur Führung der Leitung im Bereich der schwimmenden Basis umfassen, fortsetzt.

2. Verfahren nach Anspruch 1 zum Verlegen einer flexiblen Leitung (3), die aus zwei Abschnitten besteht, die jeweils mit einem starren Zubehör in Form eines Ansatzendstückes (21a, 21b) versehen sind, dadurch gekennzeichnet, daß man den Schritt a) für einen ersten Abschnitt der flexiblen, mit einem Ansatzendstück (21a) ausgerüsteten Leitung ausführt, und daß man zwei Zwischenschritte ausführt, die darin bestehen, daß man
- das Abwickeln des ersten Abschnitts der flexiblen Leitung (3), der durch die zusätzliche Einspannvorrichtung (19, 20) gehalten wird, anhält, und
- während der Abwärtsbewegung durch den Freiraum zwischen den entfernten Einspannvorrichtungen (6) einen zweiten Abschnitt der flexiblen Leitung (3), der mit einem Ansatzendstück (21b) ausgerüstet ist, heranführt und den Ansatz (21b) mit dem Ansatz (21a) des ersten Abschnitts der flexiblen Leitung (3) verbindet, woraufhin der Schritt b) für den zweiten Teil der flexiblen Leitung und anschließend Schritt c) ausgeführt wird.

3. Vorrichtung zur Durchführung des Verfahrens nach Anspruch 1 oder 2, umfassend:
- Einspannvorrichtungen (6) in Form einer linearen Winde mit im wesentlichen vertikaler Achse, die die normale Abwärtsbewegung der flexiblen Leitung (3) gewährleisten, indem sie die Oberfläche der flexiblen Leitung (3) ergreifen, und die seitlich auseinander bewegbar sind und die letzte Vorrichtung zur Führung der flexiblen Leitung (3) im Bereich der schwimmenden Basis (1) umfassen,
- eine zusätzliche Einspannvorrichtung (19, 20) mit mindestens einem länglichen beweglichen Zuginstrument (20), das mit dem an der flexiblen Leitung (3) befestigten starren Zubehör (21, 21a, 21b) verbindbar ist.

4. Vorrichtung nach Anspruch 3, dadurch gekennzeichnet, daß die Einspannvorrichtungen (6) eine Vielzahl von Kettenantrieben (11) umfassen.

5. Vorrichtung nach einem der Ansprüche 3 oder 4, dadurch gekennzeichnet, daß das längliche bewegliche Zuginstrument (20) ein Kabel ist, das mit dem an der flexiblen Leitung (3) befestigten Zubehör verbindbar und mit einer Winde (19) bewegbar ist.

6. Vorrichtung nach einem der Ansprüche 3 bis 5 zur Durchführung des Verfahrens nach Anspruch 2, dadurch gekennzeichnet, daß die zusätzliche Einspannvorrichtung eine weitere Einrichtung zur festen Halterung umfaßt, z.B. eine Halteplatte (7), die in einer ersten, offenen Stellung die flexible Leitung (3) und das oder die an ihr befestigten Zubehörteile (21, 21a, 21b) passieren läßt und in einer zweiten, geschlossenen Stellung die flexible Leitung an dem an ihr befestigten Zubehör festhält.

7. Vorrichtung nach einem der Ansprüche 3 bis 6, dadurch gekennzeichnet, daß sie eine Vorratseinrichtung (2) für flexible Leitungen (3) und eine Führungseinrichtung (4) aufweist, die dafür sorgt, daß die Richtung der in der Vorratseinrichtung (2) angeordneten flexiblen Leitung (3) allmählich in die Richtung der Einspannvorrichtungen (6) übergeht.

8. Vorrichtung nach Anspruch 7, dadurch gekennzeichnet, daß die Führungseinrichtung (4) eine Rutsche oberhalb der Einspannvorrichtungen (6) umfaßt.

9. Vorrichtung nach Anspruch 7 oder 8, dadurch gekennzeichnet, daß sie eine auf der schwimmenden Verlegebasis (1) befestigte Stützstruktur (5), z.B. einen Turm, hat, die die Einspannvorrichtungen (6), die zusätzliche Einspannvorrichtung (19, 20) und die Führungsvorrichtung (4) trägt.

## Claims

1. A process for laying from a floating support (1), a flexible conduit (3) comprising a rigid accessory (21, 21a, 21b) mounted on the said flexible conduit (3) and having an outer dimension larger than the outer diameter of the latter, wherein one unrolls a flexible conduit (3) gripped at its outer surface by linear winch-type tensioning means (6) with a substantially vertical axis, and wherein
a) to cause the section of the flexible conduit (3) whereon the accessory is mounted to pass through the said tensioning means (6), the said rigid accessory (21) is connected to auxiliary tensioning means (19, 20), so as to take up the pull exerted by the flexible conduit (3) by the said auxiliary tensioning means (19, 20), while the flexible conduit (3) is lowered through the free space between the said laterally moved-apart tensioning means (6),
b) the outer surface of the flexible conduit (3) is gripped ahead of the rigid accessory by the said tensioning means (6) after they have been brought together, so that the pull exerted by the flexible conduit (3) is again taken over by the said tensioning means (6);
c) after the auxiliary tensioning means (19) have been released, the unrolling of the flexible conduit (3) is resumed by the said tensioning means (6), the latter comprising the last means for guiding the conduit at the level of the floating support.

2. A process according to claim 1, for the laying of a flexible conduit (3) constituted by two sections each provided with a rigid accessory in the form of an end fitting (21a, 21b), characterized in that the step a) is operated for a first section of the flexible conduit provided with an end fitting (21a); that two intermediate steps are operated which lie in:
- stopping the progress of the first section of the flexible conduit (3) supported by the said auxiliary tensioning means (19, 20),
- feeding a second section of the flexible conduit (3) provided with an end fitting (21b), by causing it to be lowered through the moved-apart tensioning means (6) and connecting the end fitting (21b) to the end fitting (21a) of the first section of the flexible conduit (3); then that step b) is operated for the second section of the flexible conduit followed by step c).

3. A device for operating the process according to any one of claims 1 and 2, comprising;
- linear winch-type tensioning means (6) with a substantially vertical axis, capable of ensuring the normal lowering of the flexible conduit (3) by gripping the outer surface of the flexible conduit (3) and capable of being laterally moved apart, the said tensioning means (6) comprising the last means for guiding the flexible conduit (3) on board the floating support (1),
- auxiliary tensioning means (19, 20) comprising at least one elongate movable traction element (20) capable of being connected to the rigid accessory (21, 21a, 21b) mounted on the flexible conduit (3).

4. A device according to claim 3, characterized in that the tensioning means (6) comprise a plurality of caterpillars (11).

5. A device according to any one of claims 3 and 4, characterized in that the said elongate movable traction element (20) is a cable that can be connected to the said accessory mounted on the flexible conduit (3), and operated by a winch (19).

6. A device according to any one of claims 3 to 5 for operating the process according to claim 2, characterized in that the auxiliary tensioning means include, moreover, a fixed retaining element, such as a table support (7) which in a first open position is capable of allowing the flexible conduit (3), as well as the rigid accessory or accessories (21, 21a, 21b) mounted on the latter, to pass, and in a second closed position to retain the flexible conduit (3) by the accessory mounted thereon.

7. A device according to any one of claims 3 to 6, characterized in that it comprises means (2) for storing flexible conduits (3) and guidance means (4) ensuring that the direction of the flexible conduit (3) disposed in the storage means (2) progressively passes to the direction of the tensioning means (6).

8. A device according to claim 7, characterized in that the guidance means (4) include a throat ahead of the tensioning means (6).

9. A device according to claim 7 or 8, characterized in that it includes a supporting structure (5), such as a derrick mounted on the floating laying support (1), and allowing the tensioning means (6), the auxiliary tensioning means (19, 20), and the guidance means (4) to be supported.
